# EUROPEAN PATENT APPLICATION

(11) **EP 4 760 076 A1**
(43) Date of publication of application: **17.06.2026**
(21) Application number: 24219488.4
(22) Date of filing: 12.12.2024
(51) Int. Cl.: F02B 19/10, F02B 19/16

(54) **CYLINDER HEAD ASSEMBLY FOR AN INTERNAL COMBUSTION ENGINE**

(71) Applicant: Innio Jenbacher GmbH & Co OG, 6200 Jenbach (AT)
(72) Inventor: FIMML, Wolfgang, 6212 Maurach in Tirol (AT); ZAHNER, Lukas, 83022 Rosenheim (DE); PYSZCZEK, Rafal, 02-223 Warsaw (PL); FANKHAUSER, Thomas, 6292 Finkenberg (AT)
(74) Representative: Torggler & Hofmann Patentanwälte - Innsbruck

(57) **Abstract**

Cylinder head assembly for an internal combustion engine, comprising:
- a cylinder head (2) having a flame deck (3) at least partially provided for covering a main combustion chamber (4) and a cavity for receiving a pre-chamber component (5),
- a pre-chamber component (5) arranged inside the cavity facing the flame deck (3), wherein the pre-chamber component (5) comprises a pre-chamber (6),
wherein the pre-chamber component (5) comprises a first sealing surface (7) which is in contact with and preloaded against a corresponding second sealing surface (8) of the cylinder head (2) sealing the cavity of the cylinder head (2) .

## Description

The present disclosure concerns a cylinder head assembly for an internal combustion engine with the features of the classifying portion of claim 1. The present disclosure further concerns an internal combustion engine with such a cylinder head assembly.

Pre-chambers are widely used in internal combustion engines, acting as ignition amplifiers to ignite the burnable mixture in the main combustion chamber effectively.

The pre-chambers are commonly arranged in cylinder heads, to be more precise in a dedicated bore in which not only the pre-chamber but also the spark plug sleeve together with the spark plug is arranged.

Mostly, the spark plug sleeve and the pre-chamber component is surrounded by the coolant jacket in which the cylinder head coolant is circulating. The coolant therefore cools down the respective parts, the cylinder head wall confining the coolant jacket as well as the flame deck. A gasket is provided which is braced against the cylinder head in order to mount the pre-chamber component in the cylinder head and provide sealing of the coolant jacket and the main combustion chamber.

This design is e.g. shown in EP 4 348 027 B1.

A disadvantage of such known configurations is that between the pre-chamber component, the gasket and the cylinder head a gap or crack is present circumferentially surrounding the pre-chamber component (crevice volume).

Such a free space or crevice volumes are unfavourable, since due to the varying pressure relationships during a combustion cycle, fuel gas (e.g. natural gas) is pressed into the crevice volume at high pressure conditions (compression stroke) and released as unburned fuel back into the combustion chamber during low pressure conditions (e.g. during the exhaust stroke). This leads to an undesired release of hydrocarbon (HC) emissions into the atmosphere.

Furthermore, pre-chambers are affected by large thermal and mechanical loads. Heat is transferred to the pre-chamber component from the combustion in the pre-chamber, which heat is also at least partially dissipated over contact surfaces to the cylinder head. Therefore, it is important to have an adequate thermal conductivity between pre-chamber component and the cylinder head.

During the lifetime of the pre-chamber component deposits of the combustion are formed between the gap or crack between the pre-chamber component and the cylinder head. These deposits stem from the combustion process (primary soot) and lead to a reduction of the thermal conductivity between the spark plug and the cylinder head or spark plug sleeve.

Therefore, a problem of pre-chamber component known from the state of the art is the decrease of heat transfer between the pre-chamber component and the cylinder head during lifetime due to combustion deposits like e.g. soot in the area of the gap or crack.

The purpose of the present disclosure is to provide a cylinder head assembly for an internal combustion engine, wherein the above identified disadvantages of the state of the art can at least partially be improved and/or HC emissions can be reduced and/or the thermal conditions of the pre-chamber component can be improved.

This purpose is solved by a cylinder head assembly for an internal combustion engine with the features of claim 1. The purpose is further solved by an internal combustion engine having such a cylinder head assembly.

According to an embodiment of the present disclosure a cylinder head assembly for an internal combustion engine, comprising:
- a cylinder head having a flame deck at least partially provided for covering a main combustion chamber and a cavity for receiving a pre-chamber component,
- a pre-chamber component arranged inside the cavity facing the flame deck, wherein the pre-chamber component comprises a pre-chamber,
wherein the pre-chamber component comprises a first sealing surface which is in contact with and preloaded against a corresponding second sealing surface of the cylinder head sealing the cavity of the cylinder head.

Formulated differently, a first sealing surface is provided in such a way that a recess, groove, gap or free space between the pre-chamber component and the cylinder head is minimised because the first sealing surface is not only in contact with the second sealing surface, but also preloaded against it.

By the avoidance of such recess, groove, gap or free space between the pre-chamber component and the cylinder head the crevice volumes can be reduced or can be eliminated. The reduction or elimination of the crevice volumes reduces the unburned fuel volume because the fuel and/or air-fuel mixture supplied to the combustion chamber cannot any more escape into cavities between the cylinder head and the pre-chamber component, such that more fuel is combusted by the combustion and the HC-emissions are reduced (by reducing unburned fuel in the exhaust gas).

Furthermore, the avoidance of such recess, groove, gap or free space between the pre-chamber component and the cylinder head a thermal conductivity section can be kept clean of deposits of the combustion (e.g. soot), which directly affect the thermal conductivity. Therefore, this leads to increased effective contact area pre-chamber component and the cylinder head and thus enhances the thermal conductivity or the heat transfer, respectively.

Already present internal combustion engines can be upgraded and operated with a cylinder head arrangement according to the present disclosure. Therefore, the present disclosure can be used for the embodiments of the prior art already described in the introduction of the description.

The present disclosure can particularly preferably be used in conjunction with an internal combustion engine driving a generator for creating electrical energy. Such combinations of internal combustion engines driving a generator are known as gensets.

The internal combustion engine or genset can preferably be stationary or for naval use.

Advantageous embodiments of the invention are defined in the dependent claims.

The Cylinder head arrangement can be provided by a gasket for sealing a coolant jacket disposed around the pre-chamber component, wherein the sealing surface is provided between the flame deck and the gasket.

The sealing surface of the pre-chamber component can be provided by a chamfer, preferably by a chamfer having an angle between 20 and 70 degrees, particular preferred 45 or 60 degree, with respect to a longitudinal axis of the pre-chamber component.

The cylinder head arrangement can be provided by a cylinder head sleeve at the cylinder head circumference enclosing the pre-chamber component, wherein the second sealing surface is arranged on the cylinder head sleeve.

The cylinder head can provided by a monolithic cylinder head main component or can be provided by at least two components. Therefore, the cylinder head may be provided by a cylinder head main component and e.g. a cylinder head sleeve, a valve guide and/or valve seats.

It can be provided that the cylinder head sleeve is mounted in a corresponding cavity of the cylinder head by a press fit.

By use of a press fit between the cylinder head sleeve and the corresponding cavity of the cylinder head no recess, groove, gap or free space between the cylinder head sleeve and the cylinder head is provide, wherein no crevice volumes is build and the thermal conductivity between the components is optimized.

The separation of the cylinder head sleeve from the cylinder head main component allows to provide specific materials in the region of the contact surface with the pre-chamber component, wherein e.g. materials can be used having a high thermal conductivity.

It can be provided that cylinder head sleeve comprises a shoulder braced against a corresponding bracing surface of the cylinder head, wherein an axial movement of the cylinder head sleeve is inhibited in direction of toward the flame deck.

It can be provided that the gasket is arranged, preferably clamped, between the cylinder head sleeve and the pre-chamber component.

The pre-chamber can be fluidically connected to the side of the flame deck by transfer passages.

A pre-chamber tip portion can be provided projecting through the flame-deck into the main combustion chamber, wherein the pre-chamber tip portion comprises openings entering the transfer passages.

It can be provided that the tip portion of the pre-chamber consists of a material with lower thermal conductivity than the remaining pre-chamber component, preferably wherein the tip portion of the pre-chamber component is welded, particular preferred by friction welding, with the remining pre-chamber component.

By use of two different materials for the pre-chamber component lower temperatures of the pre-chamber tip portion can be obtained during operation of the internal combustion engine because the pre-chamber component conducts heat away from the pre-chamber tip portion much faster than in a monolithic pre-chamber.

Surprisingly, it has been discovered that the use of two different materials for the pre-chamber component can lead to lower mechanical stress in critical parts of the pre-chamber tip portion because the lower temperatures create less mechanical stress from thermal expansion, and because the zones of maximal mechanical stresses are shifted to less critical areas.

At least one ignition means, preferably a spark plug, can be provided facing the pre-chamber.

It can be provided that at least one injection valve is fluidically connected to the pre-chamber for providing air, fuel and/or an air-fuel mixture to the pre-chamber.

Furthermore, protection is sought for an internal combustion engine comprising a cylinder head assembly according to the precent disclosure.

Further details and advantages of the present disclosure are apparent from the accompanying figure and the following description of the figure.

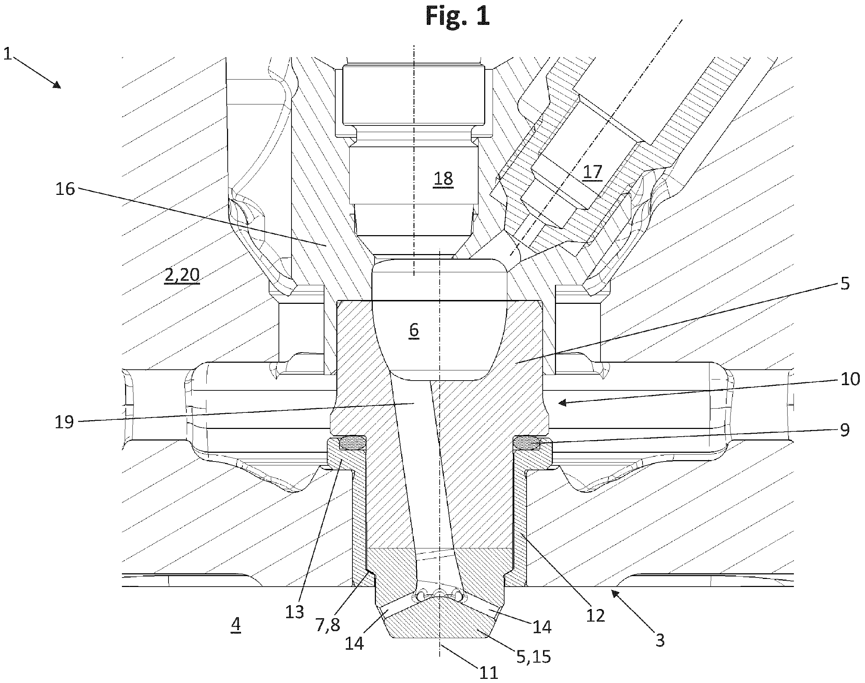

Therefore, Figure 1 shows an embodiment according to the present disclosure, in particular: a cylinder head assembly 1.

The cylinder head assembly 1 disclosed in Fig. 1 comprising a pr-chamber component 5 and a cylinder head 2.

The cylinder head 2 comprises a flame deck 3 at least partially provided for covering a main combustion chamber 4.

Furthermore, the cylinder head 2 comprises a cavity, in which cavity the pre-chamber component 5 is arranged, wherein the pre-chamber component 5 comprises or provides a pre-chamber 6.

The pre-chamber component 5, exactly speaking: the pre-chamber tip portion 15 of the pre-chamber component 5, faces the flame deck 3 and projects through the flame-deck 3 into the main combustion chamber 4.

The pre-chamber 6 shown by this specific embodiment is formed by two separate components which form a cavity in the mounted state.

The upper part forming the pre-chamber 6 is a spark plug sleeve 16 and the lower part a pre-chamber component 5 which are connected.

The spark plug sleeve 16 and the pre-chamber component 5 are placed in a cylinder head 2 of an internal combustion engine, wherein the pre-chamber component 5 (forming the distal end of the pre-chamber assembly 1) protrudes into a main combustion chamber 4 of the internal combustion chamber.

The spark plug sleeve 16 carries the pre-chamber gas valve (which would be received by the pre-chamber gas valve cavity 17) and the ignition means (which would be received by the ignition means cavity 18). The pre-chamber gas valve and the ignition means are not visualised for reasons of keep the clearance of this figure simple.

Transfer passages 14 are provided to fluidically connect the pre-chamber 6 with the main combustion chamber 4, wherein the transfer passages 14 connect the main combustion chamber 4 with a riser passage 19 which riser passage 19 fluidically connects the pre-chamber 6 with the at last one transfer passage 14.

The riser passage 19 is oblique with respect to a longitudinal axis 11 of the pre-chamber component 5, wherein a lower end of the riser passage 19 is oriented towards a centric portion at the distal end of the pre-chamber assembly 1. At the upper end of the riser passage 19 the riser passage axis 19 is oriented towards the ignition means cavity 18.

The pre-chamber component 5 comprises a first sealing surface 7 which is in contact with and preloaded against a corresponding second sealing surface 8 of the cylinder head 2 sealing the cavity of the cylinder head 2.

The cylinder head 2 comprises a cylinder head sleeve 12 circumrenal enclosing the pre-chamber component 5, wherein the second sealing surface is arranged on the cylinder head sleeve 12.

The cylinder head sleeve 12 is mounted in a corresponding cavity of the cylinder head 2 by a press fit.

By use of a press fit between the cylinder head sleeve 12 and the corresponding cavity of the cylinder head 2 no recess, groove, gap or free space between the cylinder head sleeve 12 and the cylinder head 2 is provide, wherein no crevice volumes is build and the thermal conductivity between the components is optimized.

The separation of the cylinder head sleeve 12 from a cylinder head main component 20 allows to provide specific materials in the region of the contact surface with the pre-chamber component 5, wherein e.g. materials can be used having a high thermal conductivity.

The cylinder head sleeve 12 comprises a shoulder 13 braced against a corresponding bracing surface of the cylinder head 2, wherein an axial movement of the cylinder head sleeve 12 is inhibited in direction of toward the flame deck 3.

Between the cylinder head sleeve 12 and the pre-chamber component 5 the gasket 9 is clamped.

The gasket 9 is provided for sealing a coolant jacket 10 disposed around the pre-chamber component 5, wherein the sealing surface 7, 8 is provided between the flame deck 3 and the gasket 9.

The pre-chamber component 5 is preloaded with the first sealing surface 7 against the second sealing surface 8 of the cylinder head 2 by use of a preload applied via the spark plug sleeve 16.

By use of the first sealing surface 7 and the second sealing surface 8 the gap or crack between the pre-chamber component 5 and the cylinder head 2 (or the cylinder head sleeve 12 of the cylinder head) can be sealed against the main combustion chamber 4, wherein gap or crack building a crevice volume can be reduced.

This saved volumes between the pre-chamber component 5 and the cylinder head 2 (crevice volume) has been filled by an air-fuel-mixture present - if no first sealing surface 7 and second sealing surface 8 is present - in the combustion chamber because of the high pressures during the compression stroke.

During the combustion this crevice volume has not been reached by the ignition, wherein the compressed air-fuel-mixture is not combusted.

During a subsequent decompression (the exhaust stroke) the decompressed air-fuel-mixture is released into the combustion chamber by the exhaust manifold, wherein an increased HC-emission is caused by this crevice volume.

Therefore, by use of an embodiment using a first sealing surface 7 and second sealing surface 8 the crevice volume can be reduced and therefore also the HC-emission can be reduced.

The first sealing surface 7 and the second sealing surface 8 are provided by chamfers, in particular chamfers having 45 degree with respect to a longitudinal axis 11 of the pre-chamber component 5.

The pre-chamber tip portion 15 of the pre-chamber component 5 consists of a material with lower thermal conductivity than the remaining pre-chamber component 5, wherein the pre-chamber tip portion 15 of the pre-chamber component 5 is welded, particular preferred by friction welding, with the remining pre-chamber component 5.

By use of two different materials for the pre-chamber component 5 lower temperatures of the pre-chamber tip portion 15 can be obtained during operation of the internal combustion engine because the pre-chamber component 5 conducts heat away from the pre-chamber tip portion 15 much faster than in a monolithic pre-chamber component.

Surprisingly, it has been discovered that the use of two different materials for the pre-chamber component 5 can lead to lower mechanical stress in critical parts of the pre-chamber tip portion 15 because the lower temperatures create less mechanical stress from thermal expansion, and because the zones of maximal mechanical stresses are shifted to less critical areas.

### List of used reference signs:

- 1: cylinder head assembly
- 2: cylinder head
- 3: flame deck
- 4: main combustion chamber
- 5: pre-chamber component
- 6: pre-chamber
- 7: first sealing surface
- 8: second sealing surface
- 9: gasket
- 10: cooling jacket
- 11: longitudinal axis
- 12: cylinder head sleeve
- 13: shoulder
- 14: transfer passage
- 15: pre-chamber tip portion
- 16: spark plug sleeve
- 17: pre-chamber gas valve cavity
- 18: ignition means cavity
- 19: rider passage
- 20: cylinder head main component

## Claims

1. Cylinder head assembly for an internal combustion engine, comprising:
- a cylinder head (2) having a flame deck (3) at least partially provided for covering a main combustion chamber (4) and a cavity for receiving a pre-chamber component (5),
- a pre-chamber component (5) arranged inside the cavity facing the flame deck (3), wherein the pre-chamber component (5) comprises a pre-chamber (6),
**characterised in that** the pre-chamber component (5) comprises a first sealing surface (7) which is in contact with and preloaded against a corresponding second sealing surface (8) of the cylinder head (2) sealing the cavity of the cylinder head (2).

2. Cylinder head assembly according to claim 1, wherein a gasket (9) is provided for sealing a coolant jacket (10) disposed around the pre-chamber component (5), wherein the sealing surface (7,8) is provided between the flame deck (3) and the gasket (9).

3. Cylinder head assembly according to one of the preceding claims, wherein the sealing surface (7) of the pre-chamber component (5) is provided by a chamfer, preferably by a chamfer having an angle between 20 and 70 degrees, particular preferred 45 or 60 degree, with respect to a longitudinal axis (11) of the pre-chamber component (5).

4. Cylinder head assembly according to at least one of the preceding claims, wherein a cylinder head sleeve (12) is provided at the cylinder head (2) circumference enclosing the pre-chamber component (5), wherein the second sealing surface (8) is arranged on the cylinder head sleeve (12).

5. Cylinder head assembly according to claim 4, wherein the cylinder head sleeve (12) is mounted in a corresponding cavity of the cylinder head (2) by a press fit.

6. Cylinder head assembly according to claim 4 or 5, wherein the cylinder head sleeve (12) comprises a shoulder (13) braced against a corresponding bracing surface of the cylinder head (2), wherein an axial movement of the cylinder head sleeve (12) is inhibited in direction of toward the flame deck (3).

7. Cylinder head assembly according to one of the claims 4 to 6 and claim 2, wherein the gasket (9) is arranged, preferably clamped, between the cylinder head sleeve (12) and the pre-chamber component (5).

8. Cylinder head assembly according to at least one of the preceding claims, wherein a pre-chamber (6) is fluidically connected to the side of the flame deck (3) by transfer passages (14).

9. Cylinder head assembly according to at least one of the preceding claims, wherein a pre-chamber tip portion (15) projects through the flame-deck (3) into the main combustion chamber (4), wherein the pre-chamber tip portion (15) comprises openings entering the transfer passages (14).

10. Cylinder head assembly according to claim 9, wherein the pre-chamber tip portion (15) of the pre-chamber component (5) consists of a material with lower thermal conductivity than the remaining pre-chamber component (5), preferably wherein the pre-chamber tip portion (15) of the pre-chamber component (5) is welded, particular preferred by friction welding, with the remining pre-chamber component (5).

11. Cylinder head assembly according to at least one of the preceding claims, wherein at least one ignition means, preferably a spark plug, is provided facing the pre-chamber (6) .

12. Cylinder head assembly according to at least one of the preceding claims, wherein at least one injection valve is fluidically connected to the pre-chamber (6) for providing air, fuel and/or an air-fuel mixture to the pre-chamber (6).

13. Internal combustion engine comprising a cylinder head assembly (1) according to at least one of the preceding claims.
